(19) Europäisches Patentamt / European Patent Office / Office européen des brevets

(11) **EP 3 870 997 B1**

(12) **EUROPÄISCHE PATENTSCHRIFT**

(45) Veröffentlichungstag und Bekanntmachung des Hinweises auf die Patenterteilung:
**20.11.2024 Patentblatt 2024/47**

(21) Anmeldenummer: **19789930.5**

(22) Anmeldetag: **15.10.2019**

(51) Internationale Patentklassifikation (IPC):
**G01S 7/4865** (2020.01)   **G01S 17/10** (2020.01)
**G01S 17/931** (2020.01)

(52) Gemeinsame Patentklassifikation (CPC):
**G01S 17/10; G01S 7/4865; G01S 17/931**

(86) Internationale Anmeldenummer:
**PCT/EP2019/077933**

(87) Internationale Veröffentlichungsnummer:
**WO 2020/083709 (30.04.2020 Gazette 2020/18)**

(54) **VERFAHREN ZUR BESTIMMUNG EINER ENTFERNUNG EINES OBJEKTS MITHILFE EINER OPTISCHEN DETEKTIONSVORRICHTUNG UND OPTISCHE DETEKTIONSVORRICHTUNG**

METHOD FOR DETERMINING A DISTANCE OF AN OBJECT WITH THE AID OF AN OPTICAL DETECTION APPARATUS AND OPTICAL DETECTION APPARATUS

PROCÉDÉ POUR DÉTERMINER UNE DISTANCE D'UN OBJET À L'AIDE D'UN DISPOSITIF DE DÉTECTION OPTIQUE AINSI QUE DISPOSITIF DE DÉTECTION OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2018 DE 102018126631**

(43) Veröffentlichungstag der Anmeldung:
**01.09.2021 Patentblatt 2021/35**

(73) Patentinhaber: **Valeo Schalter und Sensoren GmbH**
**74321 Bietigheim-Bissingen (DE)**

(72) Erfinder:
• **STRICKER-SHAVER, Daniel**
**74321 Bietigheim-Bissingen (DE)**
• **SCHENK, Jochen**
**74321 Bietigheim-Bissingen (DE)**
• **SELBMANN, Frank**
**74321 Bietigheim-Bissingen (DE)**

(74) Vertreter: **Pothmann, Karsten et al**
**Valeo Schalter und Sensoren GmbH**
**VIC-E-IP**
**Laiernstraße 12**
**74321 Bietigheim-Bissingen (DE)**

(56) Entgegenhaltungen:
**EP-A2- 1 291 673     US-A1- 2005 243 301**

EP 3 870 997 B1

**EP 3 870 997 B1**

**Beschreibung**

**Technisches Gebiet**

Die Erfindung betrifft ein Verfahren zur Bestimmung einer Entfernung eines Objekts mithilfe einer optischen Detektionsvorrichtung, bei dem

- wenigstens ein Lichtsignalpuls ausgesendet wird,
- wenigstens ein an dem Objekt reflektierter Lichtsignalpuls als Echo-Lichtsignalpuls empfangen wird, in wenigstens ein elektrisches Empfangssignal umgewandelt wird und das wenigstens eine elektrische Empfangssignal registriert wird,
- eine Gesamtzeit zwischen dem Aussenden des wenigstens einen Lichtsignalpulses und dem Registrieren des wenigstens einen elektrischen Empfangssignals bestimmt wird,
- eine Signallaufzeit zwischen dem Aussenden des wenigstens einen Lichtsignalpulses und dem Empfang des wenigstens einen Echo-Lichtsignalpulses als Differenz aus der Gesamtzeit und wenigstens einer Korrekturzeit ermittelt wird, wobei mit der wenigstens einen Korrekturzeit die Zeit berücksichtigt wird, welche zur Umwandlung des wenigstens einen Echo-Lichtsignalpulses in das wenigstens eine elektrische Empfangssignal und zur Registrierung des wenigstens einen elektrischen Empfangssignals erforderlich ist,
- die Signallaufzeit als Maß für die Entfernung des Objekts zur Detektionsvorrichtung verwendet wird.

Ferner betrifft die Erfindung eine optische Detektionsvorrichtung zur Bestimmung einer Entfernung eines Objekts,

- mit wenigstens einem Sender zum Senden wenigstens eines Lichtsignalpulses,
- mit wenigstens einem Empfänger zum Empfangen wenigstens eines an dem Objekt reflektierten Lichtsignalpulses als Echo-Lichtsignalpulse, zum Umwandeln des wenigstens einen Echo-Lichtsignalpulses in wenigstens ein elektrisches Empfangssignal und zum Registrieren des wenigstens einen elektrischen Empfangssignals,
- mit wenigstens einer Steuer- und Auswerteeinrichtung, welche Mittel aufweist
- zur Steuerung des wenigstens einen Senders und des wenigstens einen Empfängers,
- zur Bestimmung einer Gesamtlaufzeit zwischen dem Aussenden des wenigstens einen Lichtsignalpulses und dem Registrieren des wenigstens einen elektrischen Empfangssignals,
- zum Ermitteln einer Signallaufzeit zwischen dem Aussenden des wenigstens einen Lichtsignalpulses und dem Empfang des wenigstens einen Echo-Lichtsignalpulses als Differenz aus der Gesamtzeit und wenigstens einer Korrekturzeit, wobei mit der wenigstens einen Korrekturzeit die Zeit berücksichtigt wird, welche zur Umwandlung des wenigstens einen Echo-Lichtsignalpulses in das wenigstens eine elektrische Empfangssignal und zur Registrierung des wenigstens einen elektrischen Empfangssignals erforderlich ist,
- wobei die Signallaufzeit als Maß für die Entfernung des Objekts zur Detektionsvorrichtung verwendet werden kann.

**Stand der Technik**

Aus der EP 2 315 045 B1 ist ein Verfahren zur Messung von Entfernungen oder Entfernungsänderungen nach dem Signallaufzeitprinzip bekannt. Jeweils in einer Messperiode wird ein elektromagnetisches Signal zu einem vorgebbaren Sendezeitpunkt ausgesandt und das nach Remission in einem Überwachungsbereich empfangene Signal abgetastet. Über eine Vielzahl von Messperioden wird ein Histogramm von derart empfangenen Signalen akkumuliert und aus dem Histogramm durch eine Interpolation und damit mit einer besseren zeitlichen Auflösung als diejenige des Histogramms der Empfangszeit und damit die Laufzeit bestimmt. Die Sendezeitpunkte werden über die Vielzahl der Messperioden gemäß einer Verteilung derart vorgegeben, dass die zeitliche Position des Empfangszeit innerhalb des Histogramms über die Vielzahl von Messperioden variiert, sodass der Empfangszeit gezielt in verschiedenen Bins des Histogramms zu liegen kommt. Die Breite der Verteilung beträgt ein Vielfaches der zeitlichen Auflösung des Histogramms und die Verteilung der Sendezeitpunkt erfolgt mit einer höheren Auflösung als der des Histogramms. Optische Verfahren und Vorrichtungen zur Messung von Entfernungen nach dem Signallaufzeitprinzip sind auch aus US 2005/0243301 A1 und EP 1 291 673 A2 bekannt.

Der Erfindung liegt die Aufgabe zugrunde, ein Verfahren und eine optische Detektionsvorrichtung der eingangs genannten Art zu gestalten, bei der die Signallaufzeit und damit die Entfernung des Objekts genauer bestimmt werden kann.

2

**Offenbarung der Erfindung**

Die Erfindung wird durch die unabhängigen Ansprüche definiert.

Diese Aufgabe wird bei dem Verfahren erfindungsgemäß dadurch gelöst, dass

- der wenigstens eine empfangene Echo-Lichtsignalpuls beim Empfang in zeitlich nachfolgende diskrete Empfangszeitfenstern aufgeteilt wird, deren zeitliche Länge einer vorgegebenen Taktzeit entspricht, und die jeweilige Energie des wenigstens einen Echo-Lichtsignalpulses in den entsprechenden Empfangszeitfenstern in entsprechende elektrische Energie umgewandelt wird, wobei das Ende der jeweiligen Umwandlung jeweils als Samplezeit dem entsprechenden Empfangszeitfenster zugeordnet wird und der diskrete zeitliche Verlauf der elektrischen Energie der einander folgenden Empfangszeitfenster den zeitlichen Verlauf eines diskreten elektrischen Empfangssignals bilden,
- die elektrischen Energien der Empfangszeitfenster jeweils mit einem vorgegebenen oder vorgebbaren Schwellenwert verglichen werden,
- sobald die elektrische Energie eines Empfangszeitfensters, welches als erstes Referenz-Empfangszeitfenster bezeichnet wird, größer ist als der Schwellenwert, eine lineare Interpolation des zeitlichen Verlaufs des diskreten elektrischen Empfangssignals zeitlich vor der Samplezeit des ersten Referenz-Empfangszeitfensters ausgehend von der elektrischen Energie des ersten Referenz-Empfangszeitfensters bei dessen Samplezeit und der elektrischen Energie bei der Samplezeit des zeitlich vorausgehenden Empfangszeitfensters, welches als zweites Referenz-Empfangszeitfenster bezeichnet wird, durchgeführt wird,
- eine erste Empfangszeit ermittelt wird, in der die elektrische Energie gemäß dem linear interpolierten Abschnitt des diskreten elektrischen Empfangssignals den Schwellenwert erreicht,
- eine erste Korrekturzeit aus der Differenz zwischen der Samplezeit des ersten Referenz-Empfangszeitfensters und der ersten Empfangszeit ermittelt wird,
- eine zweite Korrekturzeit aus einer Korrekturfunktion für die erste Korrekturzeit ermittelt wird, wobei die Korrekturfunktion einen zeitlichen Verlauf eines entsprechenden zeitlich kontinuierlichen elektrischen Empfangssignals berücksichtigt,
- und die Signallaufzeit aus der Differenz der Samplezeit des ersten Referenz-Empfangszeitfensters und der zweiten Korrekturzeit ermittelt wird.

Erfindungsgemäß wird bei der Erfindung der empfangene Echo-Lichtsignalpuls, welcher einen kontinuierlichen zeitlichen Verlauf aufweist, zunächst in diskreten Abschnitten in elektrische Energie umgewandelt. Dies kann aus technischen Gründen von Vorteil sein. Durch die Korrekturfunktion wird die Empfangszeit in Hinblick auf den kontinuierlichen Verlauf des empfangenen Echo-Lichtsignalpulses korrigiert. So kann die Empfangszeit und damit die Signallaufzeit genauer bestimmt werden.

Bei der Erfindung wird die Energie des wenigstens einen Echo-Lichtsignalpulses welcher einen kontinuierlichen zeitlichen Intensitätsverlauf hat, in elektrische Energie insbesondere in Form von Ladungsträgern umgewandelt. Dies kann insbesondere mit einem ladungsgekoppelten Halbleiterbauteil, insbesondere einem Charge-coupled Device (CCD), erfolgen. Dabei wird die elektrische Energie entsprechend dem zeitlichen Verlauf des wenigstens einen Echo-Lichtsignalpulses in zeitlich nacheinander folgenden Empfangszeitfenstern, welche als "Buckets" bezeichnet werden können, kumuliert. Jedes Empfangszeitfenster enthält dabei die elektrische Energie, welche der Energie des wenigstens einen Echo-Lichtsignalpulses abzüglich entsprechender Umwandlungsverluste in dem Zeitraum des jeweiligen Empfangszeitfensters entspricht. Die zeitliche Länge der Empfangszeitfenster entspricht einer vorgegebenen Taktzeit, in der auch die Wechsel zwischen den Empfangszeitfenstern erfolgt. Das jeweilige zeitliche Ende eines Empfangszeitfensters wird als dessen Samplezeit bezeichnet. Der wenigstens eine Echo-Lichtsignalpuls mit einem kontinuierlichen Energieverlauf wird also zunächst in ein elektrisches Empfangssignal mit einem diskreten Energieverlauf umgewandelt, welches im Folgenden als diskretes elektrisches Empfangssignal bezeichnet wird.

Am Ende jedes Empfangszeitfensters wird die darin enthaltene elektrische Energie mit einem vorgegebenen oder vorgebbaren Schwellenwert verglichen. Falls die elektrische Energie größer ist als der Schwellenwert, wird das entsprechende Empfangszeitfenster als erstes Referenz-Empfangszeitfenster verwendet. Das zeitlich dem ersten Referenz-Empfangszeitfenster vorausgehende Empfangszeitfenster wird als zweites Referenz-Empfangszeitfenster verwendet. Zwischen dem ersten Referenz-Empfangszeitfenster und dem zweiten Referenz-Empfangszeitfenster wird eine lineare Interpolation des zeitlichen Verlaufs des diskreten elektrischen Empfangssignals durchgeführt. Die Referenz-Empfangszeitfenster sind dabei jeweils durch die entsprechende elektrische Energie und ihre jeweilige Samplezeit charakterisiert. Zur Durchführung der linearen Interpolation werden also die elektrischen Energien bei den entsprechenden Samplezeiten verwendet.

Der Zeitpunkt des linear interpolierten Abschnitts des Kurvenverlaufs des diskreten elektrischen Empfangssignals, in dem die elektrische Energie dem Schwellenwert entspricht, wird als erste Empfangszeit ermittelt. Die erste Empfangszeit bildet eine erste Näherung der tatsächlichen Empfangszeit.

Anschließend wird eine erste Korrekturzeit aus der Differenz zwischen der Samplezeit des ersten Referenz-Empfangszeitfensters und der ersten Empfangszeit ermittelt.

Mithilfe einer Korrekturfunktion wird für die erste Korrekturzeit eine zweite Korrekturzeit bestimmt. Die Korrekturfunktion berücksichtigt einen zeitlichen Verlauf eines entsprechenden kontinuierlichen elektrischen Empfangssignals. Bei dem kontinuierlichen elektrischen Empfangssignal wird angenommen, dass die Energie des wenigstens einen empfangenen Echo-Lichtsignalpulses kontinuierlich in elektrische Energie umgewandelt und registriert wird.

Die Signallaufzeit aus der Differenz der Samplezeit des erste Referenz-Empfangszeitfensters und der zweiten Korrekturzeit ermittelt wird. Die Signallaufzeit kann als Maß für die Entfernung insbesondere zur Weiterverarbeitung mit einem Fahrerassistenzsystem verwendet werden. Alternativ oder zusätzlich kann aus der Signallaufzeit die Entfernung des Objekts ermittelt, insbesondere berechnet, werden.

Vorteilhafterweise kann die optische Detektionsvorrichtung nach einem Lichtimpulslaufzeitverfahren arbeiten. Nach dem Lichtimpulslaufzeitverfahren arbeitende optische Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden. Dabei wird eine Laufzeit vom Aussenden eines Lichtsignalpulses mit wenigstens einem Sender und dem Empfang des entsprechenden reflektierten Lichtsignalpulses mit wenigstens einem Empfänger gemessen und daraus eine Entfernung zwischen der Detektionsvorrichtung und dem erkannten Objekt ermittelt.

Vorteilhafterweise kann die optische Detektionsvorrichtung als scannendes System ausgestaltet sein. Dabei kann mit Lichtsignalpulsen ein Überwachungsbereich abgetastet, also abgescannt, werden. Dazu können die entsprechenden Lichtsignalpulse bezüglich ihrer Senderichtung über den Überwachungsbereich geschwenkt werden. Hierbei kann wenigstens eine Umlenkeinrichtung, insbesondere eine Scaneinrichtung, eine Umlenkspiegeleinrichtung oder dergleichen, zum Einsatz kommen.

Vorteilhafterweise kann die optische Detektionsvorrichtung als laserbasiertes Entfernungsmesssystem ausgestaltet sein. Das laserbasierte Entfernungsmesssystem kann als Lichtquelle eines Senders wenigstens einen Laser, insbesondere einen Diodenlaser, aufweisen. Mit dem wenigstens einen Laser können insbesondere gepulste Lichtsignale gesendet werden. Mit dem Laser können Lichtsignalpulse in für das menschliche Auge sichtbaren oder nicht sichtbaren Frequenzbereichen emittiert werden. Entsprechend kann wenigstens ein Empfänger einen für die Frequenz der ausgesendeten Lichtsignalpulse ausgelegten Detektor, insbesondere eine (Lawinen)fotodiode, ein Dioden-Array, ein CCD-Array oder dergleichen, aufweisen. Das laserbasierte Entfernungsmesssystem kann vorteilhafterweise ein Laserscanner sein. Mit einem Laserscanner kann ein Überwachungsbereich mit Lichtsignalpulsen abgetastet werden.

Die Erfindung kann bei einem Fahrzeug, insbesondere einem Kraftfahrzeug, verwendet werden. Vorteilhafterweise kann die Erfindung bei einem Landfahrzeug, insbesondere einem Personenkraftwagen, einem Lastkraftwagen, einem Bus, einem Motorrad oder dergleichen, einem Luftfahrzeug und/oder einem Wasserfahrzeug verwendet werden. Die Erfindung kann auch bei Fahrzeugen eingesetzt werden, die autonom oder wenigstens teilautonom betrieben werden können.

Die optische Detektionsvorrichtung kann vorteilhafterweise mit wenigstens einer elektronischen Steuervorrichtung des Fahrzeugs, insbesondere einem Fahrerassistenzsystem und/oder einer Fahrwerksregelung und/oder einer Fahrer-Informationseinrichtung und/oder einem Parkassistenzsystem oder dergleichen, verbunden oder Teil einer solchen sein.

Bei einer vorteilhaften Ausgestaltung des Verfahrens kann die Korrekturfunktion aus Referenzmessungen ermittelt werden. Auf diese Weise kann die Korrekturfunktion an die verwendete Detektionsvorrichtung angepasst werden.

Vorteilhafterweise kann die Korrekturfunktion aus Messungen der Korrekturzeiten bei unterschiedlichen Entfernungen von Objekten bestimmt werden. Auf diese Weise kann eine Korrelation zwischen der Signallaufzeit und den erforderlichen Korrekturzeiten bei dem kontinuierlichen Verlauf des wenigstens einen optischen Lichtsignalpulses und entsprechend des wenigstens einen elektrischen Empfangssignals ermittelt werden.

Bei einer weiteren vorteilhaften Ausgestaltung des Verfahrens kann die Korrekturfunktion initial ermittelt werden. Auf diese Weise kann die Korrekturfunktion nach der Herstellung der Detektionsvorrichtung individuell ermittelt werden.

Vorteilhafterweise kann die Korrekturfunktion in einer Steuer- und Auswerteeinrichtung vorgegeben, insbesondere gespeichert und/oder programmiert, werden. Auf diese Weise kann die Korrekturfunktion schneller abgerufen werden.

Bei einer weiteren vorteilhaften Ausgestaltung des Verfahrens kann die Korrekturfunktion lauten

$$\text{t\_korr2} = f\_\text{t\_korr1}\,(\text{x}) = T\,\frac{\int_0^{\text{t\_korr1}} p(x)dx}{\int_0^{T} p(x)dx}\,,$$

wobei T die jeweilige Länge der Empfangszeitfenster, t_korr1 die erste Korrekturzeit, t_korr2 die zweite Korrekturzeit, p(x) die Häufigkeit des Auftretens von Ereignissen mit der ersten Korrekturzeit t_korr1 innerhalb eines Empfangszeitfensters bei einer Vielzahl von Referenzmessungen mit unterschiedlichen Signallaufzeiten ist. Auf diese Weise kann die Häufigkeit des Auftretens von Ereignissen bis zur ersten Korrekturzeit bezüglich des Auftretens von Ereignissen in dem gesamten Empfangszeitfenster gewichtet werden. So kann der kontinuierliche zeitliche Verlauf des elektrischen Empfangssignals berücksichtigt werden.

Bei einer weiteren vorteilhaften Ausgestaltung des Verfahrens kann aus der Signallaufzeit die Entfernung des Objekts von der Detektionsvorrichtung ermittelt werden. Auf diese Weise kann aus der Entfernung die Position des Objekts relativ zur Detektionsvorrichtung bestimmt werden.

Vorteilhafterweise kann aus der Signallaufzeit die Entfernung des Objekts berechnet werden.

Bei einer weiteren vorteilhaften Ausgestaltung des Verfahrens können für Lichtsignalpulse und/oder elektrische Empfangssignale mit unterschiedlichen Amplituden jeweilige Korrekturfunktionen ermittelt und/oder vorgegeben werden. Auf diese Weise können Variationen in den zeitlichen Verläufen des wenigstens einen Lichtsignalpulses und/oder des elektrischen Empfangssignals berücksichtigt werden. Derartige Variationen von unterschiedlichen Amplituden des wenigstens einen Lichtsignalpulses und/oder des elektrischen Empfangssignals hervorgerufen werden können.

Bei einer weiteren vorteilhaften Ausgestaltung des Verfahrens kann der wenigstens eine reflektierte Lichtsignalpuls mit wenigstens einem ladungsgekoppelten Halbleiterbauteil empfangen und in wenigstens ein elektrisches Empfangssignal umgewandelt werden. Mit einem ladungsgekoppelten Halbleiterbauteil können Photonen des wenigstens einen reflektieren Lichtsignalpulses in entsprechende Ladungsträger, insbesondere Elektronen, umgewandelt werden. Die Elektronen können auf elektrischem Wegen kumuliert und daraus die entsprechende elektrische Energie bestimmt werden.

Vorteilhafterweise kann das ladungsgekoppelten Halbleiterbauteil ein Charge-coupled Device (CCD) sein. Das CCD kann vorteilhafterweise zweidimensional ausgestaltet sein. Vorteilhafterweise können einige der Pixel des zweidimensionalen CCD zum Empfang des Lichtsignalpulses und zur Umwandlung in elektrische Ladungsträger aktiviert werden. Das jeweilige Empfangszeitfenster kann realisiert werden, indem für die Dauer der Taktzeit die betreffenden Pixel aktiviert werden. Nach Ablauf der Taktzeit wird der Inhalt der zum Empfang und zur Umwandlung aktivierten Pixel an benachbarte Pixel, welche nicht zum Empfang aktiviert sind, weitertransportiert. Die nicht aktivierten Pixel können zum Zwischenspeichern und zum Transport der elektrischen Ladungsträger dienen.

Bei einer weiteren vorteilhaften Ausgestaltung des Verfahrens können die Signallaufzeit und gegebenenfalls die Entfernung mit einer elektrischen Steuer- und Auswerteinrichtung ermittelt werden. Auf diese Weise können die Signallaufzeit und gegebenenfalls die Entfernung auf softwaretechnischem Wege mithilfe der Korrekturfunktion bestimmt werden.

Bei der Steuer- und Auswerteeinrichtung kann es sich um ein sogenanntes FPGA (Field Programmable Gate Array) handeln. In einem FPGA kann die entsprechende Korrekturfunktion programmiert und/oder gespeichert werden.

Ferner wird die Aufgabe bei der Detektionseinrichtung erfindungsgemäß dadurch gelöst, dass die Steuer- und Auswerteeinrichtung Mittel aufweist zur Durchführung eines erfindungsgemäßen Verfahrens.

Bei einer vorteilhaften Ausführungsform kann der Empfänger wenigstens ein ladungsgekoppeltes Halbleiterbauteil aufweisen. Mit einem ladungsgekoppelten Halbleiterbauteil kann der wenigstens eine reflektierte Lichtsignalpuls in wenigstens ein elektrisches Empfangssignal umgewandelt werden.

Vorteilhafterweise kann das ladungsgekoppelten Halbleiterbauteil ein Charge-coupled Device (CCD) sein.

Bei einer weiteren vorteilhaften Ausführungsform kann die Steuer- und Auswerteeinrichtung Mittel aufweisen zur Bestimmung einer Entfernung des Objekts von der Detektionsvorrichtung aus der Signallaufzeit. Auf diese Weise kann die Position des Objekts bestimmt werden.

Im Übrigen gelten die im Zusammenhang mit dem erfindungsgemäßen Verfahren und der erfindungsgemäßen Detektionsvorrichtung und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

**Kurze Beschreibung der Zeichnungen**

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen schematisch

Figur 1 ein Fahrzeug in der Vorderansicht, mit einem Laserscanner zur Überwachung eines Überwachungsbereichs in Fahrtrichtung vor den Fahrzeug;

Figur 2 den Laserscanner aus der Figur 1, mit einem Sender, einem Empfänger, einer Umlenkspiegeleinrichtung und einer Steuer- und Auswerteinrichtung;

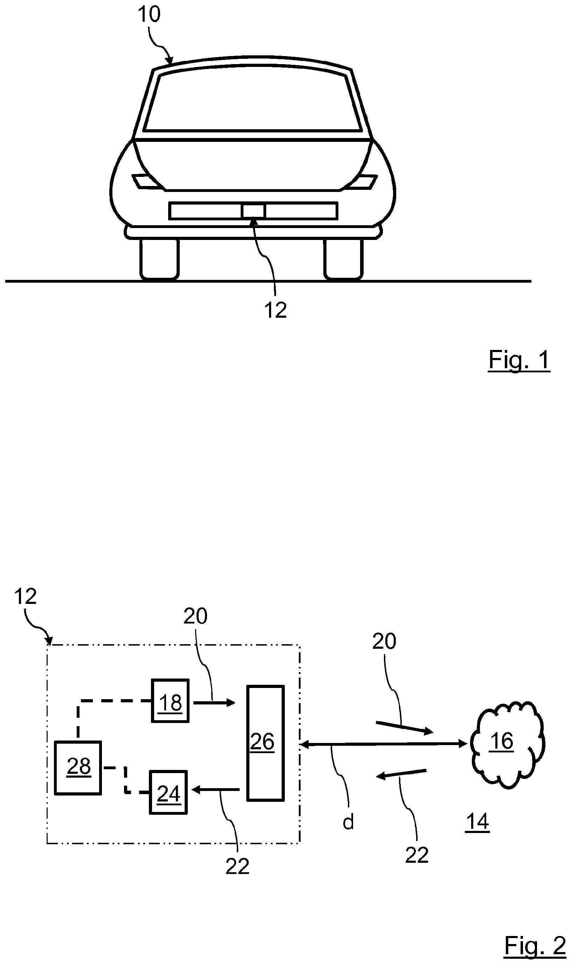

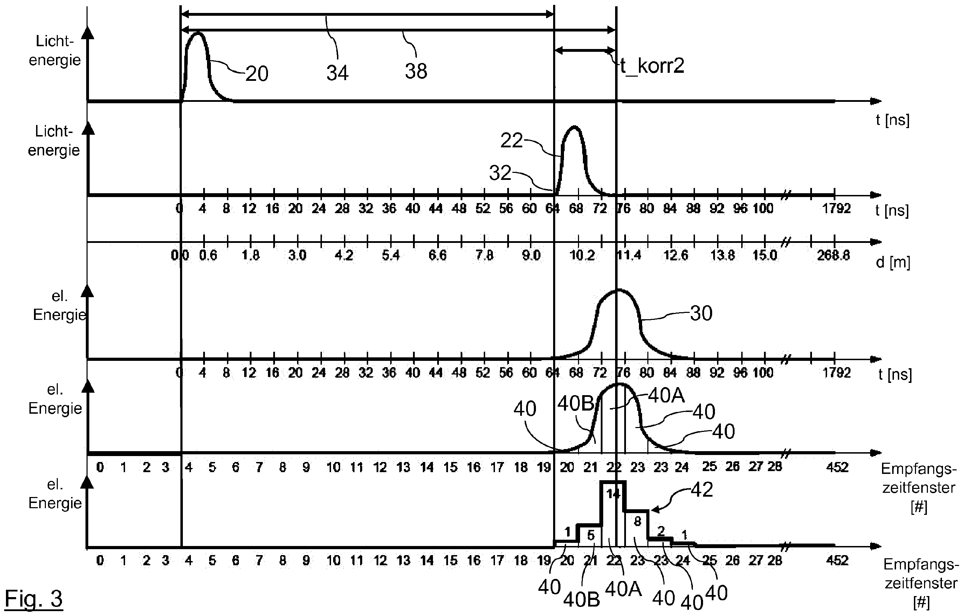

Figur 3 von oben nach unten einen zeitlichen Verlauf der Energie eines Lichtsignalpulses, welcher mit einem Sender des Laserscanners aus den Figuren 1 und 2 ausgesendet wird, einen zeitlichen Verlauf der Energie des an einem Objekt Echo-Lichtsignalpulses, welcher mit dem Empfänger des Laserscanners empfangen wird, einen zeitlichen Verlauf einer elektrischen Energie, welche mit dem Empfänger aus dem reflektierten optischen Signalpuls generiert werden; eine Zuordnung des zeitlichen Verlaufs der elektrischen Energie zu entsprechenden Empfangszeitfenstern, die elektrische Energie pro Empfangszeitfenster im zeitlichen Verlauf;

Figur 4 einen zeitlichen Verlauf der elektrischen Energie, welche auf Basis des Echo-Lichtsignalpulses generiert wird, die entsprechenden Empfangszeitfenster und Korrekturzeiten für die Empfangszeit des Echo-Lichtsignalpulses ausgehend von einer Samplezeit des ersten Empfangszeitfenster, bei dem die elektrische Energie einen vorgegebenen Schwellenwert überschreitet;

Figur 5 ein Histogramm einer Häufigkeit des Auftretens von Korrekturzeiten bei Referenzmessungen bei Objekten in unterschiedlichen Entfernungen.

In den Figuren sind gleiche Bauteile mit gleichen Bezugszeichen versehen.

**Ausführungsform(en) der Erfindung**

In der Figur 1 ist ein Fahrzeug 10 beispielhaft in Form eines Personenkraftwagens in der Vorderansicht gezeigt. Das Fahrzeug 10 umfasst eine abtastende optische Detektionsvorrichtung beispielhaft in Form eines Laserscanners 12. Der Laserscanner 12 ist beispielhaft in der vorderen Stoßstange des Fahrzeugs 10 angeordnet. Der Laserscanner 12 kann auch an einer anderen Stelle des Fahrzeugs 10 angeordnet sein.

Mit dem Laserscanner 12 kann ein in der Figur 2 bezeichneter Überwachungsbereich 14 beispielhaft in Fahrtrichtung vor dem Fahrzeug 10 auf Objekte 16 hin überwacht werden. Hierzu kann mit einem Sender 18 des Laserscanners 12 der Überwachungsbereich 14 mit entsprechenden Lichtsignalpulsen 20 in Form von Laserpulsen abgetastet werden. Bei Vorhandensein eines Objekts 16 werden die Lichtsignalpulse 20 an dem Objekt 16 wenigstens zum Teil reflektiert und als Echo-Lichtsignalpulse 22 zu dem Laserscanner 12 zurückgesendet. Mit einem entsprechenden Empfänger 24 des Laserscanners 12 werden die Echo-Lichtsignalpulse 22 empfangen.

Bei den Objekten 16 kann es sich beispielsweise um andere Fahrzeuge, Personen, Tiere, Fahrbahnmarkierungen, Straßenschilder, Hindernisse, Schlaglöcher oder dergleichen anderes handeln.

Der Laserscanner 12 arbeitet nach einem sogenannten Lichtlaufzeitverfahren, bei dem eine Laufzeit zwischen dem Aussenden eines Lichtsignalpulses 20 und dem Empfang des entsprechenden Echo-Lichtsignalpulses 22 erfasst und daraus eine Entfernung d, eine Geschwindigkeit und/oder eine Richtung des Objekts 16 relativ zum Fahrzeug 10 bestimmt werden kann.

Der Laserscanner 12 weist den Sender 18 zum Aussenden der Lichtsignalpulse 20, den Empfänger 24 zum Empfangen der Echo-Lichtsignalpulse 22, eine Umlenkspiegeleinrichtung 26 zum Umlenken der Lichtsignalpulse 20 und der Echo-Lichtsignalpulse 22 und eine Steuer- und Auswerteeinrichtung 28 zur Steuerung des Senders 18, des Empfängers 24 und der Umlenkspiegeleinrichtung 26 und zum Auswerten von elektrischen Empfangssignalen 30, welche mit dem Empfänger 24 aus den Echo-Lichtsignalpulsen 22 generiert werden. Mit der Umlenkspiegeleinrichtung 26 werden die Strahlrichtungen der Lichtsignalpulse 20 in dem Überwachungsbereich 14 geschwenkt, sodass dieser mit den Lichtsignalpulsen 20 abgetastet werden kann. Die an Objekten 16 Echo-Lichtsignalpulse 22 werden mit der Umlenkspiegeleinrichtung 26 auf den Empfänger 24 gelenkt.

Der Sender 18 weist einen Laser beispielsweise in Form einer Laserdiode auf, mit dem Lichtsignalpulse 20 mit einer Länge von beispielhaft etwa 8 ns erzeugt werden können. Der Sender 18 emittiert beispielsweise Lichtsignalpulse 20 in einem für das menschliche Auge nicht sichtbaren Bereich.

Der Sender 18 wird mit der Steuer- und Auswerteeinrichtung 28 gesteuert zur Aussendung der Lichtsignalpulse 20.

Der Empfänger 24 umfasst einen Sensor beispielsweise in Form eines an sich bekannten CCD-Arrays. Der Sensor verfügt über eine Mehrzahl von Empfangsbereichen, den sogenannten Pixeln des CCD-Arrays. Die Empfangsbereiche sind in zwei Richtungen flächig angeordnet. Die Fläche, die durch die Empfangsbereiche aufgespannt wird, verläuft quer, respektive senkrecht zu einer Empfangsrichtung, aus der die Echo-Lichtsignalpulse 22 auf den Empfänger 24 treffen. Die Empfangsbereiche können getrennt voneinander so aktiviert werden, dass lediglich die Empfangsbereiche aktiviert sind, auf welche mit der Umlenkspiegeleinrichtung 26 die Echo-Lichtsignalpulse 22 gelenkt werden.

In den aktiven Empfangsbereichen werden die Photonen des entsprechenden Echo-Lichtsignalpulses 22 in hier nicht weiter interessierender Weise in elektrische Energie in Form von elektrische Ladungsträger, beispielsweise Elektronen, umgewandelt und gesammelt. Die Ladungsträger, respektive die Anzahl der Ladungsträger, bilden die elektrischen Empfangssignalen 30, welche den Echo-Lichtsignalpuls 22 charakterisieren. Die elektrische Energie aus den aktiven Empfangsbereichen wird mit einer Taktzeit T getaktet in einer Schieberichtung in die jeweils benachbarten, nicht aktiven Empfangsbereiche verschoben. In einem letzten Schiebetakt wird die elektrische Energie schließlich in eine Auslesestufe geschoben. Mit der Auslesestufe wird der zeitliche Verlauf der elektrischen Empfangssignale 30 ermittelt.

Der Betrieb des Laserscanners 12 wird im Folgenden anhand der Figuren 2 bis 5 näher erläutert.

Zur Bestimmung der Entfernung d wird mit dem Sender 18 ein Lichtsignalpuls 20 ausgesendet. Dieser Lichtsignalpuls 20 ist in der Figur 3 im oberen Diagramm gezeigt. Der Lichtsignalpuls 20 hat eine Dauer beispielhaft von etwa 6 ns. Der Lichtsignalpuls 20 hat einen kontinuierlichen zeitlichen Verlauf.

Der Lichtsignalpuls 20 ist mit dem Sender 18 fix auf die Umlenkspiegeleinrichtung 26 gerichtet. Mit der Umlenkspiegeleinrichtung 26 wird die Strahlrichtung des Lichtsignalpulses 20 in hier nicht weiter interessierender Weise im Überwachungsbereich 14 vorgegeben. Die Strahlrichtungen einander folgenden Lichtsignalpulse 20 oder einander folgenden Gruppen von Lichtsignalpulsen 20 können mit der Umlenkspiegeleinrichtung 26 gegeneinander geschwenkt werden, um den Überwachungsbereich 14 abzutasten.

Der mit der Umlenkspiegeleinrichtung 26 umgelenkte Lichtsignalpuls 20 wird bei dem gezeigten Ausführungsbeispiel von dem Objekt 16 reflektiert und als Echo-Lichtsignalpuls 22 zum Laserscanner 12 zurückgesendet. Dort wird der Echo-Lichtsignalpuls 22 mit der Umlenkspiegeleinrichtung 26 auf den Empfänger 24 gelenkt.

Mit dem Empfänger 24 wird der Echo-Lichtsignalpuls 22 empfangen. Dies ist in der Figur 3 im zweiten Diagramm von oben gezeigt. Der tatsächliche Empfangszeit 32 ist der Moment, in dem die zeitlich vordere Flanke des Echo-Lichtsignalpulses 22 den Empfänger 24 erreicht. Aus einer Signallaufzeit 34 und der Geschwindigkeit der Lichtsignalpulse 20 und 22, nämlich der Lichtgeschwindigkeit, kann die Entfernung d berechnet werden. Die Signallaufzeit 34 ist die Zeit zwischen dem aussenden des Lichtsignalpulses 20 zu einer Sendezeit 36 und dem Empfang des Echo-Lichtsignalpulses 22 zur Empfangszeit 32. Bei den gezeigten Ausführungsbeispiel beträgt die Signallaufzeit 34, deren Ermittlung weiter unten noch beschrieben wird, etwa 64 ns.

Mit dem Empfänger 24 wird der empfangene Echo-Lichtsignalpuls 22 in das elektrische Empfangssignal 30 umgewandelt und registriert, was in der Figur 3 im 4. bis 6. Diagramm von oben gezeigt ist. Die hierfür benötigte Zeit führt zu einer Verzögerung der Registrierung des Empfangs des Echo-Lichtsignalpulses 22 gegenüber dem tatsächlichen Empfangszeit 32. Bei der Registrierung des elektrischen Empfangssignals 30 wird also zunächst nicht die Signallaufzeit 34 sondern eine Gesamtzeit 38 bestimmt, welche sich aus der Signallaufzeit 34 und der für die Umwandlung erforderlichen Verzögerung ergibt.

Um die Signallaufzeit 34 zu bestimmen, wird, wie weiter unten näher erläutert, die Differenz aus der Gesamtzeit 38 und einer Korrekturzeit t_korr2, welche aus noch ersichtlichen Gründen als zweite Korrekturzeit t_korr2 bezeichnet wird, ermittelt. Die zweite Korrekturzeit t_korr2 berücksichtigt die Zeit, die zur Umwandlung des Echo-Lichtsignalpulses 22 in das elektrische Empfangssignal 30 und zur Registrierung des elektrischen Empfangssignals 30 erforderlich ist.

Aus der so ermittelten Signallaufzeit 34 wird die Entfernung d des Objekts 16 von dem Laserscanner 12 berechnet. Die Entfernung d beträgt bei dem Ausführungsbeispiel etwa 10 m, wie in der Figur 3 im dritten Diagramm von oben gezeigt ist.

Die Ermittlung der zweiten Korrekturzeit t_korr2 wird im Folgenden näher erläutert.

Mit dem CCD-Array des Empfängers 24 wird die Lichtenergie des Echo-Lichtsignalpulses 22, welcher einen kontinuierlichen zeitlichen Verlauf hat, in elektrische Energie umgewandelt. Daraus ergibt sich das elektrische Empfangssignal 30 mit einem kontinuierlichen Verlauf. Dabei wird die elektrische Energie entsprechend dem zeitlichen Verlauf des Echo-Lichtsignalpulses 22 in zeitlich nacheinander folgenden Empfangszeitfenstern 40 kumuliert. Jedes Empfangszeitfenster 40 enthält dann die elektrische Energie, welche der Energie des Echo-Lichtsignalpulses 22 abzüglich entsprechender Umwandlungsverluste in dem jeweiligen Empfangszeitfenster 40 entspricht. Der Echo-Lichtsignalpuls 20 mit einem kontinuierlichen Energieverlauf wird also zunächst in ein elektrisches Empfangssignal mit einem diskreten Energieverlauf umgewandelt, welches im Folgenden als diskretes elektrisches Empfangssignal 42 bezeichnet wird. Das beispielhafte diskrete elektrische Empfangssignal 42 ist in der Figur 3 im sechsten Diagramm von oben gezeigt.

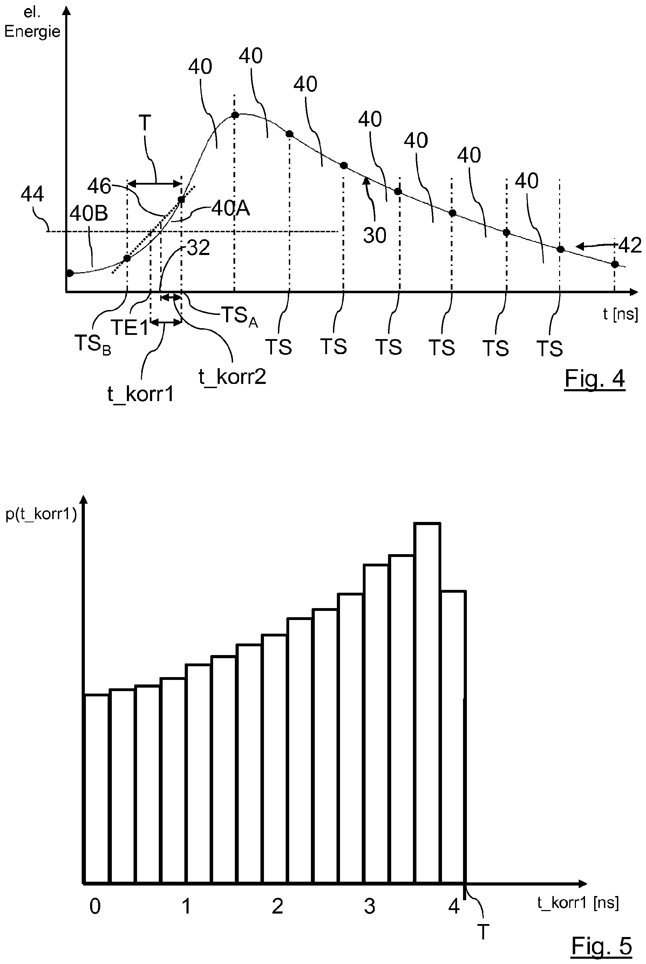

Die zeitliche Länge der Empfangszeitfenster 40 entspricht der vorgegebenen Taktzeit T, in der auch die Wechsel zwischen den Empfangszeitfenstern 40 erfolgt. Bei dem Ausführungsbeispiel beträgt die Taktzeit T = 4 ns. Das jeweilige zeitliche Ende eines Empfangszeitfensters 40 wird als dessen Samplezeit TS bezeichnet. Die Samplezeiten TS bezieht sich auf die Zeitskala der jeweiligen Entfernungsmessungen, welche mit dem aussenden des Lichtsignalpulses 20 aufseiten des Senders 18 bei der Zeit 0 s beginnt. In der Figur 4 sind der zeitliche Verlauf des kontinuierlichen elektrischen Empfangssignals 30 und die entsprechenden Empfangszeitfenster 40 zu ihren jeweiligen Taktzeiten TS mit den entsprechenden elektrischen Energien gezeigt.

Am Ende jedes Empfangszeitfensters 40, also zur jeweiligen Samplezeit TS, wird die darin enthaltene elektrische Energie mit einem in der Figur 4 gezeigten vorgegebenen Schwellenwert 44 verglichen. Falls die elektrische Energie größer ist als der Schwellenwert 44, wird das entsprechende Empfangszeitfenster 40 als erstes Referenz-Empfangszeitfenster 40A verwendet. In der Figur 4 ist dies beispielhaft das dritte Empfangszeitfenster 40. Das zeitlich dem ersten Referenz-Empfangszeitfenster 40A vorausgehende Empfangszeitfenster 40 wird als zweites Referenz-Empfangszeitfenster 40B verwendet. Die elektrische Energie des zweiten Referenz-Empfangszeitfensters 40B liegt unterhalb des Schwellenwertes 44. Die tatsächliche Empfangszeit 32 des Echo-Lichtsignalpulses 22 muss sich also zwischen der Samplezeit $TS_B$ des zweiten Referenz-Empfangszeitfensters 40B und der Samplezeit $TS_A$ des ersten Referenz-Empfangszeitfensters 40A befinden. Um die Empfangszeit 32 zu erhalten, wird beispielhaft die zweite Samplezeit $TS_A$ korrigiert.

Hierzu wird zunächst zwischen dem ersten Referenz-Empfangszeitfenster 40A und dem zweiten Referenz-Empfangszeitfenster 40B eine lineare Interpolation des zeitlichen Verlaufs des diskreten elektrischen Empfangssignals 42 durchgeführt. Dabei werden die Referenz-Empfangszeitfenster 40A und 40B jeweils durch die ihnen zugehörige elektrische Energie und ihre jeweilige Samplezeit $TS_A$ und $TS_B$ charakterisiert. Zur Durchführung linearen Interpolation werden entsprechend die elektrischen Energien und die Samplezeiten $TS_A$ und $TS_B$ herangezogen. Aus der linearen Interpolation ergibt sich ein gerader Abschnitt 46 des Kurvenverlaufs des diskreten elektrischen Empfangssignals 42.

Die Zeit, in dem die elektrische Energie des diskreten elektrischen Empfangssignals 22 in dem linear interpolierten Abschnitts 46 dem Schwellenwert 44 entspricht, wird als erste Empfangszeit TE1 ermittelt.

Anschließend wird eine erste Korrekturzeit t_korr1 aus der Differenz zwischen der Samplezeit $TS_A$ des ersten Referenz-Empfangszeitfensters 40A und der ersten Empfangszeit TE1 ermittelt. Die erste Korrekturzeit t_korr1 ist eine erste Nährung. Sie berücksichtigt jedoch nicht den kontinuierlichen Verlauf des elektrischen Empfangssignals 30.

Um dies zu berücksichtigen, wird mithilfe einer Korrekturfunktion aus der ersten Korrekturzeit t_korr1 die oben bereits erwähnte zweite Korrekturzeit t_korr2 bestimmt.

Diese Korrekturfunktion lautet

$$\text{t\_korr2} = f\_\text{t\_korr1}(x) = T\, \frac{\int_0^{\text{t\_korr1}} p(x)\, dx}{\int_0^T p(x)\, dx}$$

Dabei ist p(x) die Häufigkeit des Auftretens der ersten Korrekturzeit t_korr1 innerhalb eines Empfangszeitfensters 40 mit der Länge der Taktzeit T bei einer Vielzahl von Referenzmessungen mit unterschiedlichen Signallaufzeiten 34.

Mithilfe der Korrekturfunktion f_t_korr1(x) kann für jede innerhalb der Taktzeit T auftretende erste Korrekturzeit t_korr1 eine entsprechende zweite Korrekturzeit t_korr2 ermittelt werden. Hierbei wird angenommen, dass bei Referenzmessungen bei unterschiedlichen Entfernungen d eines Objekts 16 von dem Laserscanner 12 alle zweiten Korrekturzeiten t_korr2 innerhalb der Taktzeit T mit gleicher Häufigkeit vorkommen. Die Korrekturfunktion f_t_korr1(x) berücksichtigt einen zeitlichen Verlauf eines entsprechenden kontinuierlichen elektrischen Empfangssignals 30, bei dem die Energie des empfangenen Echo-Lichtsignalpulses 22 kontinuierlich in elektrische Energie umgewandelt und registriert wird.

Figur 5 zeigt beispielhaft ein Diagramm der Häufigkeiten p(t_korr1) von ersten Korrekturzeiten t_korr1 innerhalb der Taktzeit T für eine Vielzahl von Referenzmessungen. Die Korrekturfunktion f_t_korr1(x) wird initial, beispielsweise nach der Herstellung des Laserscanners 12, ermittelt, und in der Steuer- und Auswerteeinrichtung 28 hinterlegt.

Die tatsächliche Empfangszeit 32 wird aus der Differenz der ersten Samplezeit TSA des erste Referenz-Empfangszeitfensters 40A und der zweiten Korrekturzeit t_korr2 berechnet. Aus der Empfangszeit 32 wird die Signallaufzeit 34 ermittelt. Aus der Signallaufzeit 34 wird die Entfernung d des Objekts 16 ermittelt.

Die Korrekturfunktion f_t_korr1(x) kann optional für Echo-Lichtsignalpulse 22 mit unterschiedlichen Amplituden, also unterschiedlichen Energien, bestimmt werden. Auf diese Weise können Einflüsse der Amplituden auf den Kurvenverlauf des Echo-Lichtsignalpulses 22 und des entsprechenden kontinuierlichen elektrischen Empfangssignals 30 kompensiert werden.

**Patentansprüche**

**1.** Verfahren zur Bestimmung einer Entfernung (d) eines Objekts (16) mithilfe einer optischen Detektionsvorrichtung (12), bei dem

- wenigstens ein Lichtsignalpuls (20) ausgesendet wird,
- wenigstens ein an dem Objekt (16) reflektierter Lichtsignalpuls (20) als Echo-Lichtsignalpuls (22) empfangen wird, in wenigstens ein elektrisches Empfangssignal (42) umgewandelt wird und das wenigstens eine elektrische Empfangssignal (42) registriert wird,
- eine Gesamtzeit (38) zwischen dem Aussenden des wenigstens einen Lichtsignalpulses (20) und dem Registrieren des wenigstens einen elektrischen Empfangssignals (42) bestimmt wird,
- eine Signallaufzeit (34) zwischen dem Aussenden des wenigstens einen Lichtsignalpulses (20) und dem Empfang des wenigstens einen Echo-Lichtsignalpulses (22) als Differenz aus der Gesamtzeit (38) und wenigstens einer Korrekturzeit (t_korr1, t_korr2) ermittelt wird, wobei mit der wenigstens einen Korrekturzeit (t_korr1, t_korr2) die Zeit berücksichtigt wird, welche zur Umwandlung des wenigstens einen Echo-Lichtsignalpulses (22) in das wenigstens eine elektrische Empfangssignal (42) und zur Registrierung des wenigstens einen elektrischen Empfangssignals (42) erforderlich ist,

- die Signallaufzeit (34) als Maß für die Entfernung (d) des Objekts (16) zur Detektionsvorrichtung (12) verwendet wird,

- der wenigstens eine empfangene Echo-Lichtsignalpuls (22) beim Empfang in zeitlich nachfolgende diskrete Empfangszeitfenster (40, 40A, 40B) aufgeteilt wird, deren zeitliche Länge einer vorgegebenen Taktzeit (T) entspricht, und die jeweilige Energie des wenigstens einen Echo-Lichtsignalpulses (22) in den entsprechenden Empfangszeitfenstern (40, 40A, 40B) in entsprechende elektrische Energie umgewandelt wird, wobei das Ende der jeweiligen Umwandlung jeweils als Samplezeit (TS, $TS_A$, $TS_B$) dem entsprechenden Empfangszeitfenster (40, 40A, 40B) zugeordnet wird und der diskrete zeitliche Verlauf der elektrischen Energie der einander folgenden Empfangszeitfenster (40, 40A, 40B) den zeitlichen Verlauf eines diskreten elektrischen Empfangssignals (42) bilden,

- die elektrischen Energien der Empfangszeitfenster (40, 40A, 40B) jeweils mit einem vorgegebenen oder vorgebbaren Schwellenwert (44) verglichen werden,

- sobald die elektrische Energie eines Empfangszeitfensters (40A), welches als erstes Referenz-Empfangszeitfenster (40A) bezeichnet wird, größer ist als der Schwellenwert (44), eine lineare Interpolation des zeitlichen Verlaufs des diskreten elektrischen Empfangssignals (42) zeitlich vor der Samplezeit ($TS_A$) des ersten Referenz-Empfangszeitfensters (40A) ausgehend von der elektrischen Energie des ersten Referenz-Empfangszeitfensters (40A) bei dessen Samplezeit ($TS_A$) und der elektrischen Energie bei der Samplezeit ($TS_B$) des zeitlich vorausgehenden Empfangszeitfensters (40B), welches als zweites Referenz-Empfangszeitfenster (40B) bezeichnet wird, durchgeführt wird,

- eine erste Empfangszeit (TE1) ermittelt wird, in dem die elektrische Energie gemäß dem linear interpolierten Abschnitt (46) des diskreten elektrischen Empfangssignals (42) den Schwellenwert (44) erreicht, **dadurch gekennzeichnet, dass**

- eine erste Korrekturzeit (t_korr1) aus der Differenz zwischen der Samplezeit ($TS_A$) des ersten Referenz-Empfangszeitfensters (40A) und der ersten Empfangszeit (TE1) ermittelt wird,

- eine zweite Korrekturzeit (t_korr2) aus einer Korrekturfunktion (f_t_korr1(x)) für die erste Korrekturzeit (t_korr1) ermittelt wird, wobei die Korrekturfunktion (f_t_korr1(x)) einen zeitlichen Verlauf eines entsprechenden zeitlich kontinuierlichen elektrischen Empfangssignals (30) berücksichtigt,

- und die Signallaufzeit (34) aus der Differenz der Samplezeit ($TS_A$) des ersten Referenz-Empfangszeitfensters (40A) und der zweiten Korrekturzeit (t_korr2) ermittelt wird.

2. Verfahren nach Anspruch 1, **dadurch gekennzeichnet, dass** die Korrekturfunktion (f_t_korr1(x)) aus Referenzmessungen ermittelt wird.

3. Verfahren nach Anspruch 1 oder 2, **dadurch gekennzeichnet, dass** die Korrekturfunktion (f_t_korr1(x)) initial ermittelt wird.

4. Verfahren nach einem der vorigen Ansprüche, **dadurch gekennzeichnet, dass** die Korrekturfunktion lautet

$$\text{t\_korr2} = f\_\text{t\_korr1}\,(x) = T\,\frac{\int_0^{\text{t\_korr1}} p(x)dx}{\int_0^T p(x)dx}\,,$$

wobei T die jeweilige Länge der Empfangszeitfenster (40, 40A, 40B), t_korr1 die erste Korrekturzeit, t_korr2 die zweite Korrekturzeit, p(x) die Häufigkeit des Auftretens von Ereignissen mit der ersten Korrekturzeit (t_korr1) innerhalb eines Empfangszeitfensters (40, 40A, 40B) bei einer Vielzahl von Referenzmessungen mit unterschiedlichen Signallaufzeiten (34) ist.

5. Verfahren nach einem der vorigen Ansprüche, **dadurch gekennzeichnet, dass** aus der Signallaufzeit (34) die Entfernung (d) des Objekts (16) von der Detektionsvorrichtung (12) ermittelt wird.

6. Verfahren nach einem der vorigen Ansprüche, **dadurch gekennzeichnet, dass** für Lichtsignalpulse (20) und/oder elektrische Empfangssignale (42) mit unterschiedlichen Amplituden jeweilige Korrekturfunktionen (f_t_korr1(x)) ermittelt und/oder vorgegeben werden.

**7.** Verfahren nach einem der vorigen Ansprüche, **dadurch gekennzeichnet, dass** der wenigstens eine reflektierte Lichtsignalpuls (20) mit wenigstens einem ladungsgekoppelten Halbleiterbauteil empfangen und in wenigstens ein elektrisches Empfangssignal (42) umgewandelt wird.

**8.** Verfahren nach einem der vorigen Ansprüche, **dadurch gekennzeichnet, dass** die Signallaufzeit (34) und gegebenenfalls die Entfernung (d) mit einer elektrischen Steuer- und Auswerteinrichtung (28) ermittelt wird.

**9.** Optische Detektionsvorrichtung (12) zur Bestimmung einer Entfernung (d) eines Objekts (16),

- mit wenigstens einem Sender (18) zum Senden wenigstens eines Lichtsignalpulses (20),
- mit wenigstens einem Empfänger (24) zum Empfangen wenigstens eines an dem Objekt (16) reflektierten Lichtsignalpulses (20) als Echo-Lichtsignalpulse (22), zum Umwandeln des wenigstens einen Echo-Lichtsignalpulses (22) in wenigstens ein elektrisches Empfangssignal (42) und zum Registrieren des wenigstens einen elektrischen Empfangssignals (42),
- mit wenigstens einer Steuer- und Auswerteeinrichtung (28), welche Mittel aufweist
- zur Steuerung des wenigstens einen Senders (18) und des wenigstens einen Empfängers (24),
- zur Bestimmung einer Gesamtlaufzeit (38) zwischen dem Aussenden des wenigstens einen Lichtsignalpulses (20) und dem Registrieren des wenigstens einen elektrischen Empfangssignals (42),
- zum Ermitteln einer Signallaufzeit (34) zwischen dem Aussenden des wenigstens einen Lichtsignalpulses (20) und dem Empfang des wenigstens einen Echo-Lichtsignalpulses (22) als Differenz aus der Gesamtzeit (38) und wenigstens einer Korrekturzeit (t_korr1, t_korr2), wobei mit der wenigstens einen Korrekturzeit (t_korr1, t_korr2) die Zeit berücksichtigt wird, welche zur Umwandlung des wenigstens einen Echo-Lichtsignalpulses (22) in das wenigstens eine elektrische Empfangssignal (42) und zur Registrierung des wenigstens einen elektrischen Empfangssignals (42) erforderlich ist, wobei die Signallaufzeit (34) als Maß für die Entfernung (d) des Objekts (16) zur Detektionsvorrichtung (12) verwendet werden kann,
- zum Aufteilen des wenigstens einen empfangenen Echo-Lichtsignalpulses (22) beim Empfang in zeitlich nachfolgende diskrete Empfangszeitfenster (40, 40A, 40B), deren zeitliche Länge einer vorgegebenen Taktzeit (T) entspricht, und die jeweilige Energie des wenigstens einen Echo-Lichtsignalpulses (22) in den entsprechenden Empfangszeitfenstern (40, 40A, 40B) in entsprechende elektrische Energie umgewandelt wird, wobei das Ende der jeweiligen Umwandlung jeweils als Samplezeit (TS, $TS_A$, $TS_B$) dem entsprechenden Empfangszeitfenster (40, 40A, 40B) zugeordnet wird und der diskrete zeitliche Verlauf der elektrischen Energie der einander folgenden Empfangszeitfenster (40, 40A, 40B) den zeitlichen Verlauf eines diskreten elektrischen Empfangssignals (42) bilden,
- zum Vergleichen der elektrischen Energien der Empfangszeitfenster (40, 40A, 40B) jeweils mit einem vorgegebenen oder vorgebbaren Schwellenwert (44),
- sobald die elektrische Energie eines Empfangszeitfensters (40A), welches als erstes Referenz-Empfangszeitfenster (40A) bezeichnet wird, größer ist als der Schwellenwert (44), zum Durchführen einer linearen Interpolation des zeitlichen Verlaufs des diskreten elektrischen Empfangssignals (42) zeitlich vor der Samplezeit ($TS_A$) des ersten Referenz-Empfangszeitfensters (40A) ausgehend von der elektrischen Energie des ersten Referenz-Empfangszeitfensters (40A) bei dessen Samplezeit ($TS_A$) und der elektrischen Energie bei der Samplezeit ($TS_B$) des zeitlich vorausgehenden Empfangszeitfensters (40B), welches als zweites Referenz-Empfangszeitfenster (40B) bezeichnet wird,
- zum Ermitteln einer ersten Empfangszeit (TE1), in dem die elektrische Energie gemäß dem linear interpolierten Abschnitt (46) des diskreten elektrischen Empfangssignals (42) den Schwellenwert (44) erreicht,

**dadurch gekennzeichnet, dass**

- die Steuer- und Auswerteeinrichtung (28) Mittel aufweist
- zum Ermitteln einer ersten Korrekturzeit (t_korr1) aus der Differenz zwischen der Samplezeit ($TS_A$) des ersten Referenz-Empfangszeitfensters (40A) und der ersten Empfangszeit (TE1),
- zum Ermitteln einer zweiten Korrekturzeit (t_korr2) aus einer Korrekturfunktion (f_t_korr1(x)) für die erste Korrekturzeit (t_korr1), wobei die Korrekturfunktion (f_t_korr1(x)) einen zeitlichen Verlauf eines entsprechenden zeitlich kontinuierlichen elektrischen Empfangssignals (30) berücksichtigt,
- und zum Ermitteln der Signallaufzeit (34) aus der Differenz der Samplezeit ($TS_A$) des ersten Referenz-Empfangszeitfensters (40A) und der zweiten Korrekturzeit (t_korr2).

**10.** Detektionsvorrichtung nach Anspruch 9, **dadurch gekennzeichnet, dass** der Empfänger (24) wenigstens ein ladungsgekoppeltes Halbleiterbauteil aufweist.

**11.** Detektionsvorrichtung nach Anspruch 9 oder 10, **dadurch gekennzeichnet, dass** die Steuer- und Auswerteeinrichtung (28) Mittel aufweist zur Bestimmung einer Entfernung (d) des Objekts (16) von der Detektionsvorrichtung (12) aus der Signallaufzeit (34).

**Claims**

**1.** Method for determining a distance (d) of an object (16) with the aid of an optical detection apparatus (12), wherein

- at least one light signal pulse (20) is emitted,
- at least one light signal pulse (20) reflected at the object (16) is received as an echo light signal pulse (22), is converted into at least one electrical reception signal (42), and the at least one electrical reception signal (42) is registered,
- a total time (38) between the emission of the at least one light signal pulse (20) and the registering of the at least one electrical reception signal (42) is determined,
- a signal time of flight (34) between the emission of the at least one light signal pulse (20) and the reception of the at least one echo light signal pulse (22) is ascertained as a difference between the total time (38) and at least one correction time (t_korr1, t_korr2), wherein, with the at least one correction time (t_korr1, t_korr2), the time that is required for converting the at least one echo light signal pulse (22) into the at least one electrical reception signal (42) and for registering the at least one electrical reception signal (42) is taken into account,
- the signal time of flight (34) is used as a measure of the distance (d) of the object (16) from the detection apparatus (12),
- the at least one received echo light signal pulse (22) is divided upon reception into temporally successive discrete reception time windows (40, 40A, 40B) having a temporal length that corresponds to a prescribed cycle time (T), and the respective energy of the at least one echo light signal pulse (22) in the corresponding reception time windows (40, 40A, 40B) is converted into corresponding electrical energy, wherein the end of the respective conversion is assigned in each case as the sampling time (TS, $TS_A$, $TS_B$) to the corresponding reception time window (40, 40A, 40B) and the discrete temporal profile of the electrical energy of the successive reception time windows (40, 40A, 40B) forms the temporal profile of a discrete electrical reception signal (42),
- the electrical energies of the reception time windows (40, 40A, 40B) are compared in each case with a prescribed or prescribable threshold value (44),
- as soon as the electrical energy of a reception time window (40A), which is referred to as a first reference reception time window (40A), is greater than the threshold value (44), a linear interpolation of the temporal profile of the discrete electrical reception signal (42) is carried out temporally before the sampling time ($TS_A$) of the first reference reception time window (40A), starting from the electrical energy of the first reference reception time window (40A) at the sampling time ($TS_A$) thereof and the electrical energy during the sampling time ($TS_B$) of the temporally preceding reception time window (40B), which is referred to as a second reference reception time window (40B),
- a first reception time (TE1) is ascertained, in which the electrical energy according to the linearly interpolated section (46) of the discrete electrical reception signal (42) reaches the threshold value (44),

**characterized in that**,

- a first correction time (t_korr1) is ascertained from the difference between the sampling time ($TS_A$) of the first reference reception time window (40A) and the first reception time (TE1),
- a second correction time (t_korr2) is ascertained from a correction function (f_t_korr1(x)) for the first correction time (t_korr1), wherein the correction function (f_t_korr1(x)) takes into account a temporal profile of a corresponding temporally continuous electrical reception signal (30),
- and the signal time of flight (34) is ascertained from the difference between the sampling time ($TS_A$) of the first reference reception time window (40A) and the second correction time (t_korr2).

**2.** Method according to Claim 1, **characterized in that** the correction function (f_t_korr1(x)) is ascertained from reference measurements.

**3.** Method according to Claim 1 or 2, **characterized in that** the correction function (f_t_korr1(x)) is ascertained initially.

**4.** Method according to any of the preceding claims, **characterized in that** the correction function is

$$t\_korr2 = f\_t\_korr1 (x) = T \frac{\int_0^{t\_korr1} p(x)dx}{\int_0^T p(x)dx},$$

wherein T is the respective length of the reception time window (40, 40A, 40B), t_korr1 is the first correction time, t_korr2 is the second correction time, p(x) is the frequency of the occurrence of events with the first correction time (t_korr1) within a reception time window (40, 40A, 40B) for a multiplicity of reference measurements with different signal times of flight (34).

5. Method according to any of the preceding claims, **characterized in that** the distance (d) of the object (16) from the detection apparatus (12) is ascertained from the signal time of flight (34).

6. Method according to any of the preceding claims, **characterized in that** respective correction functions (f_t_korr1(x)) are ascertained and/or prescribed for light signal pulses (20) and/or electrical reception signals (42) having different amplitudes.

7. Method according to any of the preceding claims, **characterized in that** the at least one reflected light signal pulse (20) is received using at least one charge-coupled semiconductor component and converted into at least one electrical reception signal (42).

8. Method according to any of the preceding claims, **characterized in that** the signal time of flight (34) and possibly the distance (d) are ascertained using an electrical control and evaluation device (28).

9. Optical detection apparatus (12) for determining a distance (d) of an object (16),

   - having at least one transmitter (18) for transmitting at least one light signal pulse (20),
   - having at least one receiver (24) for receiving at least one light signal pulse (20) reflected at the object (16) as an echo light signal pulse (22), for converting the at least one echo light signal pulse (22) into at least one electrical reception signal (42) and for registering the at least one electrical reception signal (42),
   - having at least one control and evaluation device (28) having means
   - for controlling the at least one transmitter (18) and the at least one receiver (24),
   - for determining a total time of flight (38) between the emission of the at least one light signal pulse (20) and the registering of the at least one electrical reception signal (42),
   - for ascertaining a signal time of flight (34) between the emission of the at least one light signal pulse (20) and the reception of the at least one echo light signal pulse (22) as a difference between the total time (38) and at least one correction time (t_korr1, t_korr2), wherein, with the at least one correction time (t_korr1, t_korr2), the time that is required for converting the at least one echo light signal pulse (22) into the at least one electrical reception signal (42) and for registering the at least one electrical reception signal (42) is taken into account, wherein the signal time of flight (34) can be used as a measure of the distance (d) of the object (16) from the detection apparatus (12),
   - for dividing the at least one received echo light signal pulse (22) upon reception into temporally successive discrete reception time windows (40, 40A, 40B) having a temporal length that corresponds to a prescribed cycle time (T), and the respective energy of the at least one echo light signal pulse (22) in the corresponding reception time windows (40, 40A, 40B) is converted into corresponding electrical energy, wherein the end of the respective conversion is assigned in each case as the sampling time (TS, TS$_A$, TS$_B$) to the corresponding reception time window (40, 40A, 40B) and the discrete temporal profile of the electrical energy of the successive reception time windows (40, 40A, 40B) forms the temporal profile of a discrete electrical reception signal (42),
   - for comparing the electrical energies of the reception time windows (40, 40A, 40B) in each case with a prescribed or prescribable threshold value (44),
   - for carrying out, as soon as the electrical energy of a reception time window (40A), which is referred to as a first reference reception time window (40A), is greater than the threshold value (44), a linear interpolation of the temporal profile of the discrete electrical reception signal (42) temporally before the sampling time (TS$_A$) of the first reference reception time window (40A), starting from the electrical energy of the first reference reception time window (40A) at the sampling time (TS$_A$) thereof and the electrical energy during the sampling time (TS$_B$) of the temporally preceding reception time window (40B), which is referred to as a second reference reception time window (40B),
   - for ascertaining a first reception time (TE1), in which the electrical energy according to the linearly interpolated section (46) of the discrete electrical reception signal (42) reaches the threshold value (44), **characterized in**

**that**,

- the control and evaluation device (28) has means
- for ascertaining a first correction time (t_korr1) from the difference between the sampling time ($TS_A$) of the first reference reception time window (40A) and the first reception time (TE1),
- for ascertaining a second correction time (t_korr2) from a correction function (f_t_korr1(x)) for the first correction time (t_korr1), wherein the correction function (f_t_korr1(x)) takes into account a temporal profile of a corresponding temporally continuous electrical reception signal (30),
- and for ascertaining the signal time of flight (34) from the difference between the sampling time ($TS_A$) of the first reference reception time window (40A) and the second correction time (t_korr2).

10. Detection apparatus according to Claim 9, **characterized in that** the receiver (24) has at least one charge-coupled semiconductor component.

11. Detection apparatus according to Claim 9 or 10, **characterized in that** the control and evaluation device (28) has means for determining from the signal time of flight (34) a distance (d) of the object (16) from the detection apparatus (12).

**Revendications**

1. Procédé permettant de déterminer une distance (d) d'un objet (16) à l'aide d'un dispositif de détection optique (12), dans lequel

   - au moins une impulsion de signal lumineux (20) est émise,
   - au moins une impulsion de signal lumineux (20) réfléchie sur l'objet (16) est reçue sous la forme d'une impulsion de signal lumineux d'écho (22), est convertie en au moins un signal de réception électrique (42), et ledit au moins un signal de réception électrique (42) est enregistré,
   - un temps total (38) entre l'émission de ladite au moins une impulsion de signal lumineux (20) et l'enregistrement dudit au moins un signal de réception électrique (42) est déterminé,
   - un temps de propagation de signal (34) entre l'émission de ladite au moins une impulsion de signal lumineux (20) et la réception de ladite au moins une impulsion de signal lumineux d'écho (22) est établi sous la forme d'une différence entre le temps total (38) et au moins un temps de correction (t_korr1, t_korr2), dans lequel ledit au moins un temps de correction (t_korr1, t_korr2) tient compte du temps qui est nécessaire pour convertir ladite au moins une impulsion de signal lumineux d'écho (22) en au moins un signal de réception électrique (42) et pour enregistrer ledit au moins un signal de réception électrique (42),
   - le temps de propagation de signal (34) est utilisé comme une mesure de la distance (d) entre l'objet (16) et le dispositif de détection (12),
   - lors de la réception, ladite au moins une impulsion de signal lumineux d'écho (22) reçue est divisée en fenêtres temporelles de réception (40, 40A, 40B) discrètes consécutives dans le temps dont la durée correspond à un temps de cycle (T) prédéfini, et l'énergie respective de ladite au moins une impulsion de signal lumineux d'écho (22) dans les fenêtres temporelles de réception (40, 40A, 40B) correspondantes est convertie en une énergie électrique correspondante, dans lequel la fin de la conversion respective est attribuée respectivement sous forme de temps d'échantillonnage (TS, $TS_A$, $TS_B$) à la fenêtre temporelle de réception (40, 40A, 40B) correspondante, et l'évolution dans le temps discrète de l'énergie électrique des fenêtres temporelles de réception (40, 40A, 40B) consécutives constitue l'évolution dans le temps d'un signal de réception électrique discret (42),
   - les énergies électriques des fenêtres temporelles de réception (40, 40A, 40B) sont comparées respectivement avec une valeur seuil (44) prédéfinie ou prédéfinissable,
   - dès que l'énergie électrique d'une fenêtre temporelle de réception (40A), appelée première fenêtre temporelle de réception de référence (40A), est supérieure à la valeur seuil (44), une interpolation linéaire de l'évolution dans le temps du signal de réception électrique discret (42) est effectuée temporellement avant le temps d'échantillonnage ($TS_A$) de la première fenêtre temporelle de réception de référence (40A) à partir de l'énergie électrique de la première fenêtre temporelle de réception de référence (40A) au temps d'échantillonnage ($TS_A$) de celle-ci et de l'énergie électrique au temps d'échantillonnage ($TS_B$) de la fenêtre temporelle de réception (40B) temporellement précédente, appelée deuxième fenêtre temporelle de réception de référence (40B),
   - un premier temps de réception (TE1) est établi dans lequel l'énergie électrique selon la partie (46) interpolée linéairement du signal de réception électrique discret (42) atteint la valeur seuil (44),

   **caractérisé en ce que**

- un premier temps de correction (t_korr1) est établi à partir de la différence entre le temps d'échantillonnage (TS$_A$) de la première fenêtre temporelle de réception de référence (40A) et du premier temps de réception (TE1),
- un deuxième temps de correction (t_korr2) est établi à partir d'une fonction de correction (f_t_korr1(x)) pour le premier temps de correction (t_korr1), dans lequel la fonction de correction (f_t_korr1(x)) tient compte d'une évolution dans le temps d'un signal de réception électrique (30), continu dans le temps, correspondant,
- et le temps de propagation de signal (34) est établi à partir de la différence entre le temps d'échantillonnage (TS$_A$) de la première fenêtre temporelle de réception de référence (40A) et du deuxième temps de réception (t_korr2),

2. Procédé selon la revendication 1, **caractérisé en ce que** la fonction de correction (f_t_korr1(x)) est établie à partir de mesures de référence.

3. Procédé selon la revendication 1 ou 2, **caractérisé en ce que** la fonction de correction (f_t_korr1(x)) est établie initialement.

4. Procédé selon l'une quelconque des revendications précédentes, **caractérisé en ce que** la fonction de correction est

$$\text{t\_korr2} = f\_\text{t\_korr1}\,(x) = T\,\frac{\int_0^{\text{t\_korr1}} p(x)dx}{\int_0^{T} p(x)dx},$$

où T est la longueur respective des fenêtres temporelles de réception (40, 40A, 40B), t_korr1 est le premier temps de correction, t_korr2 est le deuxième temps de correction, p(x) est la fréquence de l'apparition d'évènements avec le premier temps de correction (t_korr1) à l'intérieur d'une fenêtre temporelle de réception (40, 40A, 40B) pour une pluralité de mesures de référence avec des temps de propagation de signal (34) différents.

5. Procédé selon l'une quelconque des revendications précédentes, **caractérisé en ce que** la distance (d) entre l'objet (16) et le dispositif de détection (12) est établie à partir du temps de propagation de signal (34).

6. Procédé selon l'une quelconque des revendications précédentes, **caractérisé en ce que** des fonctions de correction (f_t_korr1(x)) respectives sont établies et/ou prédéfinies pour des impulsions de signal lumineux (20) et/ou des signaux de réception électriques (42) de différentes amplitudes.

7. Procédé selon l'une quelconque des revendications précédentes, **caractérisé en ce que** ladite au moins une impulsion de signal lumineux réfléchie (20) est reçue par moins un composant semi-conducteur à couplage de charge et est convertie en au moins un signal de réception électrique (42).

8. Procédé selon l'une quelconque des revendications précédentes, **caractérisé en ce que** le temps de propagation de signal (34) et le cas échéant la distance (d) sont établis par un dispositif de commande et d'évaluation électrique (28).

9. Dispositif de détection optique (12) permettant de déterminer une distance (d) d'un objet (16), comprenant

- au moins un émetteur (18) pour émettre au moins une impulsion de signal lumineux (20),
- au moins un récepteur (24) pour recevoir au moins une impulsion de signal lumineux (20) réfléchie sur l'objet (16) en tant qu'impulsion de signal lumineux d'écho (22), pour convertir ladite au moins une impulsion de signal lumineux d'écho (22) en au moins un signal de réception électrique (42) et pour enregistrer ledit au moins un signal de réception électrique (42),
- au moins un dispositif de commande et d'évaluation (28) qui présente des moyens pour
- commander ledit au moins un émetteur (18) et ledit au moins un récepteur (24),
- déterminer un temps de propagation total (38) entre l'émission de ladite au moins une impulsion de signal lumineux (20) et l'enregistrement dudit au moins un signal de réception électrique (42),
- établir un temps de propagation de signal (34) entre l'émission de ladite au moins une impulsion de signal lumineux (20) et la réception de ladite au moins une impulsion de signal lumineux d'écho (22) sous la forme d'une différence entre le temps total (38) et au moins un temps de correction (t_korr1, t_korr2), dans lequel ledit au moins un temps de correction (t_korr1, t_korr2) tient compte du temps qui est nécessaire pour convertir ladite au moins une impulsion de signal lumineux d'écho (22) en au moins un signal de réception électrique (42) et pour enregistrer ledit au moins un signal de réception électrique (42), dans lequel le temps de propagation de signal (34) peut être utilisé comme une mesure de la distance (d) entre l'objet (16) et le dispositif de détection (12),

- lors de la réception, diviser ladite au moins une impulsion de signal lumineux d'écho (22) reçue en fenêtres temporelles de réception (40, 40A, 40B) discrètes consécutives dans le temps dont la durée correspond à un temps de cycle (T) prédéfini, et l'énergie respective de ladite au moins une impulsion de signal lumineux d'écho (22) dans les fenêtres temporelles de réception (40, 40A, 40B) correspondantes est convertie en une énergie électrique correspondante, dans lequel la fin de la conversion respective est attribuée respectivement sous forme de temps d'échantillonnage (TS, $TS_A$, $TS_B$) à la fenêtre temporelle de réception (40, 40A, 40B) correspondante, et l'évolution dans le temps discrète de l'énergie électrique des fenêtres temporelles de réception (40, 40A, 40B) consécutives constitue l'évolution dans le temps d'un signal de réception électrique discret (42),

- comparer les énergies électriques des fenêtres temporelles de réception (40, 40A, 40B) respectivement avec une valeur seuil prédéfinie ou prédéfinissable (44),

- dès que l'énergie électrique d'une fenêtre temporelle de réception (40A), appelée première fenêtre temporelle de réception de référence (40A), est supérieure à la valeur seuil (44), effectuer une interpolation linéaire de l'évolution dans le temps du signal de réception électrique discret (42) temporellement avant le temps d'échantillonnage ($TS_A$) de la première fenêtre temporelle de réception de référence (40A) à partir de l'énergie électrique de la première fenêtre temporelle de réception de référence (40A) au temps d'échantillonnage ($TS_A$) de celle-ci et de l'énergie électrique au temps d'échantillonnage ($TS_B$) de la fenêtre temporelle de réception (40B) temporellement précédente, appelée deuxième fenêtre temporelle de réception de référence (40B),

- établir un premier temps de réception (TE1) dans lequel l'énergie électrique selon la partie (46) interpolée linéairement du signal de réception électrique discret (42) atteint la valeur seuil (44),

**caractérisé en ce que**

- le dispositif de commande et d'évaluation (28) présente des moyens pour
- établir un premier temps de correction (t_korr1) à partir de la différence entre le temps d'échantillonnage ($TS_A$) de la première fenêtre temporelle de réception de référence (40A) et du premier temps de réception (TE1),
- établir un deuxième temps de correction (t_korr2) à partir d'une fonction de correction (f_t_korr1(x)) pour le premier temps de correction (t_korr1), dans lequel la fonction de correction (f_t_korr1(x)) tient compte d'une évolution dans le temps d'un signal de réception électrique (30), continu dans le temps, correspondant,
- et établir le temps de propagation de signal (34) à partir de la différence entre le temps d'échantillonnage ($TS_A$) de la première fenêtre temporelle de réception de référence (40A) et du deuxième temps de réception (t_korr2) ,

10. Dispositif de détection selon la revendication 9, **caractérisé en ce que** le récepteur (24) présente au moins un composant semi-conducteur à couplage de charge.

11. Dispositif de détection selon la revendication 9 ou 10, **caractérisé en ce que** le dispositif de commande et d'évaluation (28) présente des moyens pour déterminer une distance (d) entre l'objet (16) et le dispositif de détection (12) à partir du temps de propagation de signal (34) .

Fig. 1

Fig. 2

Fig. 3

EP 3 870 997 B1

Fig. 4

Fig. 5

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2315045 B1
- US 20050243301 A1

- EP 1291673 A2